# EUROPÄISCHE PATENTSCHRIFT

(11) **EP 2 251 136 B1**
(45) Veröffentlichungstag und Bekanntmachung des Hinweises auf die Patenterteilung: **21.12.2011**
(21) Anmeldenummer: 10162149.8
(22) Anmeldetag: 06.05.2010
(51) Int. Cl.: B23P 6/00, F01D 5/00, F01D 5/18

(54) **Verfahren zum Aufarbeiten einer Turbinenschaufel**
Method for reconditioning a turbine blade
Procédé de remise en état d'une aube de turbine

(30) Priorität: 15.05.2009 CH 7682009
(43) Veröffentlichungstag der Anmeldung: 17.11.2010
(73) Patentinhaber: Alstom Technology Ltd, 5400 Baden (CH)
(72) Erfinder: Stämpfli, Matthias, CH-5312, Döttingen (CH); Seemann, Michael, D-79725, Laufenburg (DE); Maitz, Reto, CH-5726, Unterkulm (CH); Schweizer, Raphael, CH-5426, Lengnau (CH); Ahmad Zainuddin, Ahmad Zaki Bin, CH-5210, Windisch (CH); Miglietti, Warren, Jupiter, FL 33477 (US)

(56) Entgegenhaltungen:
- EP-A- 0 926 313
- EP-A- 1 471 210
- DE-A1- 19 963 716

## Beschreibung

### TECHNISCHES GEBIET

Die vorliegende Erfindung bezieht sich auf das Gebiet der Gasturbinen. Sie betrifft ein Verfahren zum Aufarbeiten einer Turbinenschaufel gemäss dem Oberbegriff des Anspruchs 1. Eine Turbinenschaufel dieser Art sowie ein Herstelllungsverfahren einer solchen Turbinenschaufel sind in der EP 0 926 313 A1 beschrieben.

### STAND DER TECHNIK

Gasturbinen, wie sie als stationäre Maschinen beispielsweise in Kombikraftwerken eingesetzt werden, komprimieren in einem Kompressorteil angesaugt Luft, leiten die verdichtete Luft zu einer Brennkammer, wo sie zur Verbrennung eines Brennstoffs eingesetzt wird. Die heissen Verbrennungsgase werden in einer nachfolgenden Turbine unter Arbeitsleistung entspannt und dann nach aussen abgegeben oder zur Erzeugung von Dampf durch einen Abhitzedampferzeuger geleitet. Die Schaufeln im Turbinenteil, die in abwechselnd hintereinander angeordnete Kränze aus (fest stehenden) Leitschaufeln und (rotierenden) Laufschaufeln unterteilt sind, sind durch die im Heissgaskanal der Turbine strömenden, extrem heissen Gase hohen thermischen und mechanischen Belastungen ausgesetzt. Um eine möglichst hohe Turbineneintrittstemperatur und damit einen guten Wirkungsgrad zu erreichen, werden für die Schaufeln der Turbine spezielle Materialien und Kühlungstechniken eingesetzt.

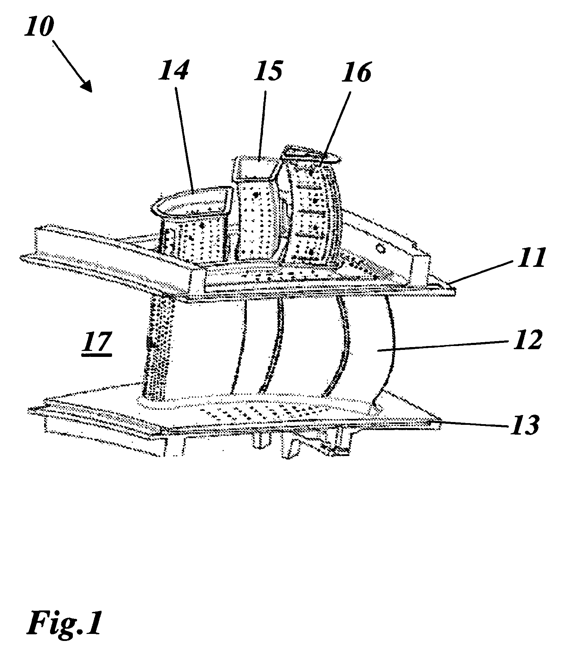

Besonders belastet ist die erste Reihe der Leitschaufeln unmittelbar hinter dem Ausgang der Brennkammer, weil dort die Temperaturen der heissen Verbrennungsgase am höchsten sind. In Fig. 1 ist in einer perspektivischen Seitenansicht eine beispielhafte Leitschaufel aus der ersten Reihe einer am Markt befindlichen Gasturbine dargestellt. Die Leitschaufel 10 umfasst ein sich in Schaufellängsrichtung bzw. in radialer Richtung der Gasturbine erstreckendes Schaufelblatt 12, das an den Enden in eine innere Plattform 13 und eine äussere Plattform 11 übergeht. Die inneren Plattformen 13 aller Leitschaufeln 10 eines Kranzes bilden zusammen eine ringförmige Innenwand, die den Heissgaskanal 17 nach innen begrenzt. Entsprechend bilden alle äusseren Plattformen 11 eine ringförmige Aussenwand, die den Heissgaskanal 17 nach aussen begrenzt. In bevorzugten Bereichen der Plattformen 11, 13 und des Schaufelblatts 12 sind Löcher bzw. Lochreihen angeordnet, durch die Kühlluft in den Heissgaskanal 17 einströmt und dort einen schützenden Kühlluftfilm bildet.

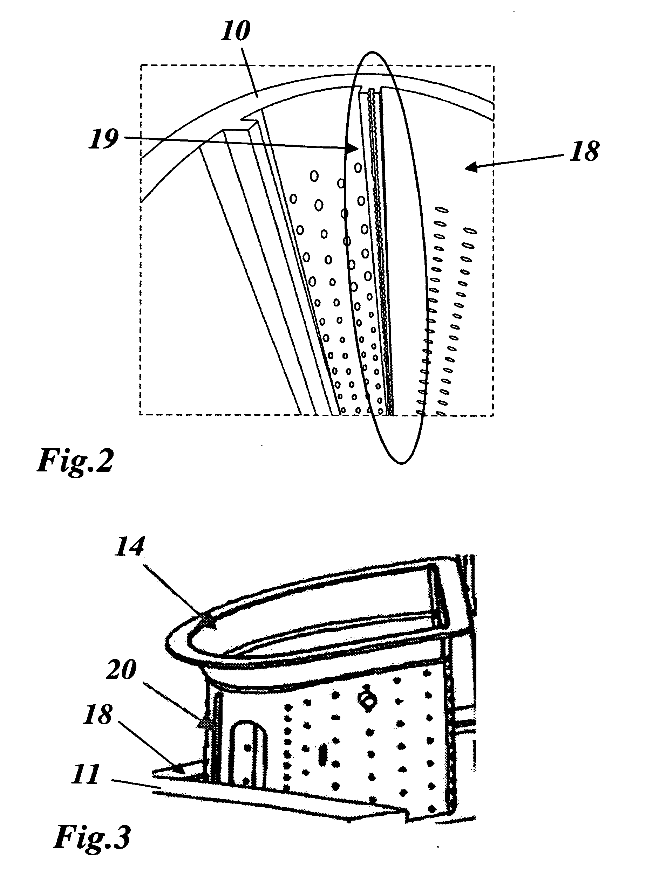

Die Leitschaufel 10 bzw. deren Schaufelblatt 12 wird aber auch von innen gekühlt. Dazu hat das Schaufelblatt 12 einen hohlen Innenraum (18 in Fig. 2 oder 3), durch den Kühlluft geleitet und auf definierte Weise in Kontakt mit den Innenseiten der Schaufelblattwände gebracht wird. Dazu ist eine Mehrzahl von mit Lochreihen versehenen, hohlen Einsätzen 14, 15 und 16 vorgesehen, die in Längsrichtung in den Innenraum 18 des Schaufelblatts 12 einschiebbar sind und aus der in ihrem Inneren herangeführten Kühlluft einzelnen Kühlluftstrahlen bilden, die zur Prallkühlung auf die Innenseiten der Schaufelwände gerichtet sind. Zur Unterteilung des Innenraums 18 in einzelne Abteile sind an der Innenseite der Schaufelwand in Schaufellängsrichtung verlaufende Dichtungsnuten 19 ausgebildet (Fig. 2), in die der entsprechende Einsatz 14 mit einer passenden Rippe 20 (Fig. 3) eingeschoben werden kann.

Die in Fig. 2 gezeigte Dichtungsnut 19 sitzt unmittelbar im Bereich der Vorderkante der Schaufel und ist dadurch thermisch besonders belastet. Nicht selten verliert daher diese Nut nach längerer Betriebszeit ihre ursprüngliche Form und Integrität, so dass die beabsichtigte Dichtungsfunktion im Zusammenwirken mit der Rippe 20 des Einsatzes 14 nicht mehr gewährleistet ist und die Kühlung der Schaufel nicht mehr in gewohnter Weise funktioniert. Um die Schaufel dennoch weiter einsetzen zu können, wäre es wünschenswert, wenn die Schaufel mit begrenztem Aufwand so aufgearbeitet werden könnte, dass sie ihre ursprüngliche Funktionalität wieder in vollem Umfang zurückerhält.

### DARSTELLUNG DER ERFINDUNG

Es ist daher Aufgabe der Erfindung, ein Verfahren zum Aufarbeiten einer Turbinenschaufel, insbesondere einer Leitschaufel aus der ersten Schaufelreihe einer Gasturbine, anzugeben, mit dem für die Kühlung notwendige defekte Bereiche im Inneren der Schaufel mit begrenztem Aufwand beseitigt werden können.

Die Aufgabe wird durch die Gesamtheit der Merkmale des Anspruchs 1 gelöst. Wichtig für die erfindungsgemässe Lösung ist, dass in einem ersten Schritt eine defekte Dichtungsnut unter Ausbildung eines Schlitzes aus der Innenwand des Schaufelblattes entfernt wird, dass in einem zweiten Schritt eine zum Abdichten vorgesehene Einschubleiste in den Schlitz eingesetzt wird, und dass in einem dritten Schritt die in dem Schlitz sitzende Einschubleiste mit der Innenwand des Schaufelblattes stoffschlüssig verbunden wird. Durch das Verfahren wird eine lokale Reparatur ermöglicht, welche die übrigen Bereiche der Schaufel weitgehend unberührt lässt.

Gemäss einer Ausgestaltung des Verfahrens nach der Erfindung werden die Entfernung der Dichtungsnut und das Einbringen des Schlitzes mittels eines Funkenerosionsverfahrens durchgeführt.

Eine andere Ausgestaltung der Erfindung zeichnet sich dadurch aus, dass der Schlitz einen schwalbenschwanzförmigen Querschnitt aufweist und die Einschubleiste einen daran angepassten Querschnitt hat.

Die Einschubleiste kann dabei bereits vor dem Einsetzen in den Schlitz mit einer in Längsrichtung verlaufenden Dichtungsnut versehen sein.

Es ist aber auch denkbar, dass die Einschubleiste nach dem Einsetzen in den Schlitz und der stoffschlüssigen Verbindung mit der Innenwand des Schaufelblattes mit einer in Längsrichtung verlaufenden Dichtungsnut versehen wird.

Vorzugsweise wird dabei die Dichtungsnut durch ein Funkenerosionsverfahren erzeugt.

Eine weitere Ausgestaltung der Erfindung ist dadurch gekennzeichnet, dass die in dem Schlitz sitzende Einschubleiste mit der Innenwand des Schaufelblattes durch Hartlöten stoffschlüssig verbunden wird.

Insbesondere kann zum Hartlöten ein CoNiCrWC-Pulver vom Typ MM509 verwendet werden, wobei der Prozess eine Temperaturbehandlung bei etwa 1220 °C einschliesst.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht eine beispielhafte Leitschaufel aus der ersten Reihe einer Gasturbine, wobei die für die innere Kühlung der Schaufel notwendigen Einsätze teilweise herausgezogen sind;
- Fig. 2: die Ansicht der Innenseite einer Schaufel gemäss Fig. 1 mit einer durch den Betrieb beschädigten Dichtungsnut für den vorderen Einsatz aus Fig. 1;
- Fig. 3: in vergrösserter Detailansicht den vorderen Einsatz aus Fig. 1 mit der in die Dichtungsnut eingreifenden Rippe;
- Fig. 4: in einer Gesamtansicht (Fig. 4a) und einer vergrösserten Detailansicht (Fig. 4b) die Bohrung, die zur Durchführung des erfindungsgemässen Verfahrens in den Deckel des Schaufelblatt- Innenraums eingebracht werden muss;
- Fig. 5: die zu Fig. 2 vergteichbare Ansicht der Innenseite der Schaufel mit dem in die Wand des Schaufelblatts eingebrachten schwalbenschwanzförmigen Schlitz;
- Fig. 6: in einer Gesamtansicht (Fig. 6a) und einer vergrösserten Detailansicht (Fig. 6b) die Einschubleiste, die als Ersatz für die entfernte Dichtungsnut aus Fig. 2 in den schwalbenschwanzförmigen Schlitz eingeschoben wird;
- Fig. 7: die zu Fig. 2 vergleichbare Ansicht der Innenseite der Schaufel mit der teilweise in den schwalbenschwanzförmigen Schlitz eingeschobenen Einschubleiste;
- Fig. 8: die Ansicht der vollständig eingeschobenen und in Lötmaterial eingebetteten Einschubleiste;
- Fig. 9: in einer zu Fig. 4a vergleichbaren Darstellung das Verschliessen der Bohrung mit einem Stopfen; und
- Fig. 10: ein Querschnitt der eingelöteten Einschubleiste.

### WEGE ZUR AUSFÜHRUNG DER ERFINDUNG

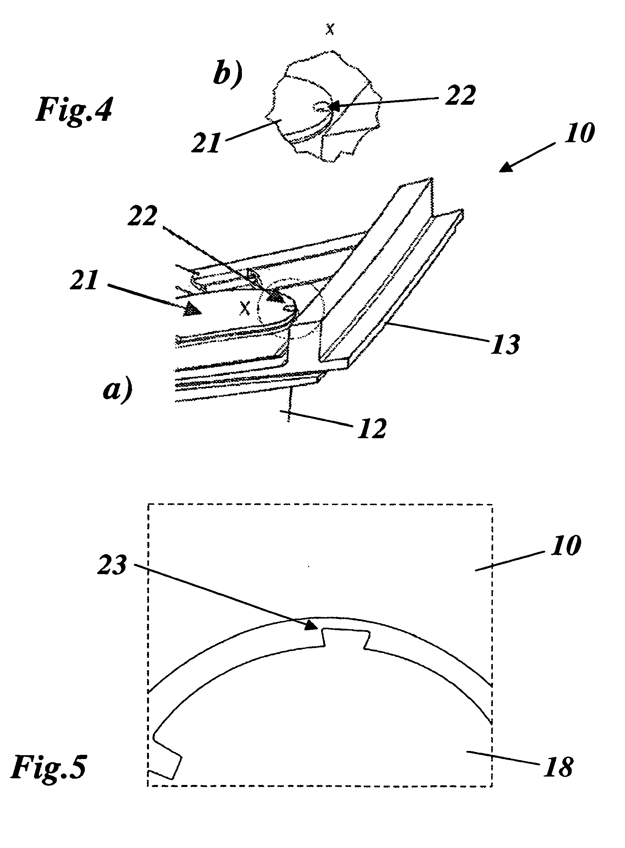

Ausgehend von der in Fig. 2 gezeigten Situation wird bei der Durchführung des erfindungsgemässen Verfahrens der Aufarbeitung zunächst gemäss Fig. 4 in die Abdeckplatte 21, die auf der Unterseite der inneren Plattform 13 den Innenraum 18 des Schaufelblatts 12 verschliesst, an der Stelle, an der die Dichtungsnut 19 sitzt, eine Bohrung 22 eingebracht, die mit der Dichtungsnut 19 fluchtet und den freien Zugang von aussen zur Dichtungsnut 19 ermöglicht.

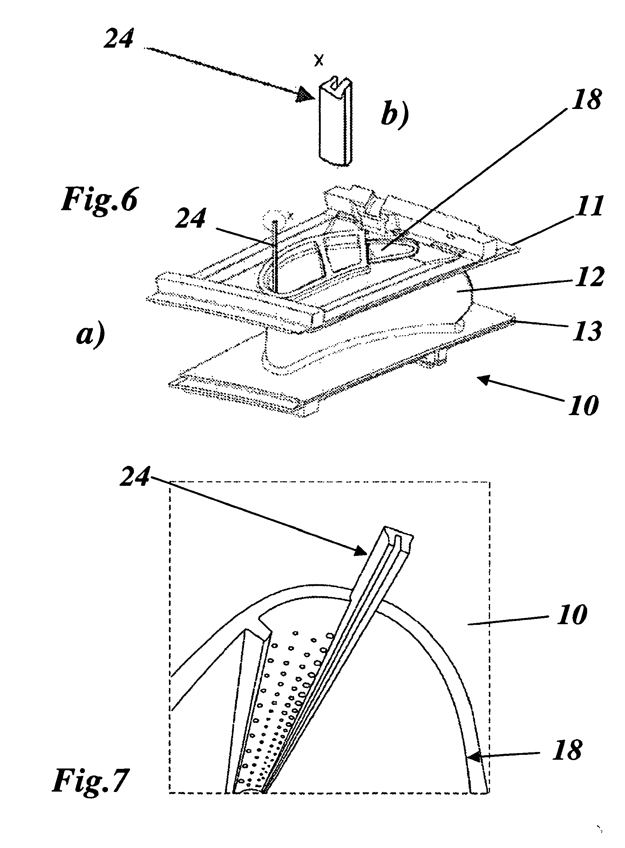

Mit einem Funkenerosionsverfahren (EDM) wird dann die beschädigte Dichtungsnut 19 aus der Wand des Schaufelblatts 12 über die gesamte Länge des Schaufelblatts 12 entfernt und an deren Stelle ein Schlitz 23 in die Wand eingebracht, dessen schwalbenschwanzförmiger Querschnitt in Fig. 5 deutlich zu sehen ist. Der schwalbenschwanzförmige Querschnitt ermöglicht durch den damit verbundenen Formschluss eine optimale geometrische und mechanische Verankerung der einzulötenden Einschubleiste (Fig. 6, 7) während des Lötens und hält die Leiste im Notfall auch dann während des Betriebs, wenn die Lötverbindung fehlerhaft sein sollte.

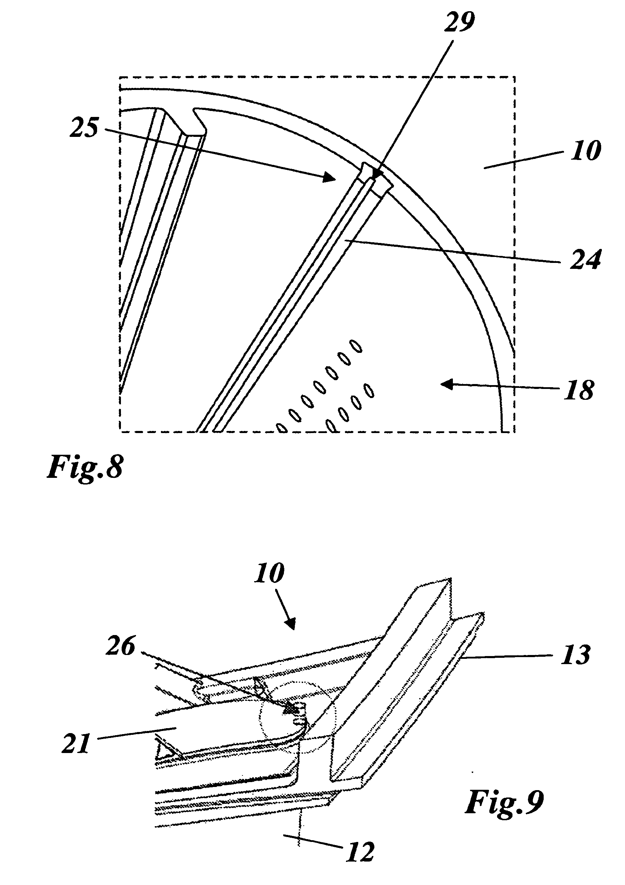

In den gemäss Fig. 5 ausgearbeiteten Schlitz 23 wird nun eine Einschubleiste 24 mit angepasstem Querschnitt von der offenen Seite her eingeschoben (Fig. 6, 7) und in ein geeignetes Lötmaterial 25 bzw. Lot eingebettet (Fig. 8). Die Einschubleiste 24 kann dabei von vornherein die neue Dichtungsnut 29 aufweisen.

Die Dichtungsnut 29 kann aber auch erst später, nach dem Einlöten der Einschubleiste 24, in diese mittels EDM eingebracht werden. Ist die Einschubleiste 24 eingeschoben und mit dem Lötmaterial 25 versehen, kann der eigentliche Lötprozess durchgeführt werden. Wird als Lötmaterial bzw. Hartlot ein CoNiCrWC-Pulver vom Typ MM509 verwendet wird, schliesst der Lötprozess eine Temperaturbehandlung bei etwa 1220 °C ein. Nach dem oder gleichzeitig mit dem Einlöten der Einschubleiste 24 kann die Bohrung 22 mit einem passenden Stopfen 26 (Fig. 9) wieder verschlossen werden.

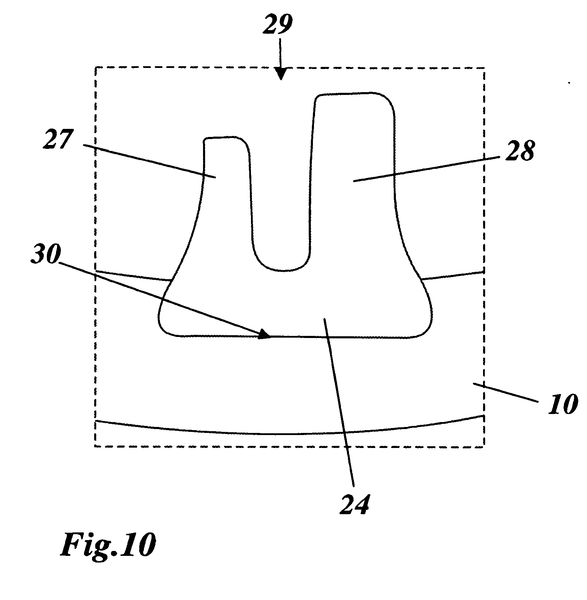

Mit dem Verfahren ergibt sich eine aufgearbeitete Leitschaufel, bei der eine beschädigte Dichtungsnut im Inneren des Schaufelblatts durch eine hart eingelötete Einschubleiste mit einer neuen Dichtungsnut ersetzt ist. Das Ergebnis ist im Querschnitt der Fig. 10 zu sehen, der die eingelötete Einschubleiste 24 mit der Lötverbindung 30 und der neuen Dichtungsnut 29 zeigt, die von den zwei Seitenwänden 27 und 28 begrenzt wird.

### BEZUGSZEICHENLISTE

- 10: Leitschaufel
- 11: äussere Plattform
- 12: Schaufelblatt
- 13: innere Plattform
- 14,15,16: Einsatz
- 17: Heissgaskanal
- 18: Innenraum (Schaufelblatt)
- 19: Dichtungsnut (U-förmig)
- 20: Rippe
- 21: Abdeckplatte
- 22: Bohrung
- 23: Schlitz (schwalbenschwanzförmig)
- 24: Einschubleiste
- 25: Lötmaterial
- 26: Stopfen
- 27,28: Seitenwand
- 29: Dichtungsnut
- 30: Lötverbindung

## Patentansprüche

1. Verfahren zum Aufarbeiten einer Turbinenschaufel, insbesondere einer Leitschaufel (10) aus der ersten Schaufelreihe einer Gasturbine, welche Turbinenschaufel (10) ein sich in Schaufellängsrichtung erstreckendes Schaufelblatt (12) umfasst, in dessen hohlen Innenraum (18) in Schaufellängsrichtung Einsätze (14, 15, 16) zur Verteilung und Lenkung von im Innenraum (18) strömender Kühlluft einschiebbar sind, wobei die Einsätze (14, 15, 16) mit einer Rippe (20) dichtend in eine in Schaufellängsrichtung verlaufende, an der Innenwand des Schaufelblattes (12) ausgeformte U-förmige Dichtungsnut (19) eingreifen, **dadurch gekennzeichnet, dass** in einem ersten Schritt die Dichtungsnut unter Ausbildung eines Schlitzes (23) aus der Innenwand des Schaufelblattes (12) entfernt wird, dass in einem zweiten Schritt eine zum Abdichten vorgesehene Einschubleiste (24) in den Schlitz (23) eingesetzt wird, und dass in einem dritten Schritt die in dem Schlitz (23) sitzende Einschubleiste (24) mit der Innenwand des Schaufelblattes (12) stoffschlüssig verbunden wird.

2. Verfahren nach Anspruch 1, **dadurch gekennzeichnet, dass** die Entfernung der Dichtungsnut (19) und das Einbringen des Schlitzes (23) mittels eines Funkenerosionsverfahrens durchgeführt wird.

3. Verfahren nach Anspruch 1 oder 2, **dadurch gekennzeichnet, dass** der Schlitz (23) einen schwalbenschwanzförmigen Querschnitt aufweist und die Einschubleiste (24) einen daran angepassten Querschnitt hat.

4. Verfahren nach Anspruch 3, **dadurch gekennzeichnet, dass** die Einschubleiste (24) bereits vor dem Einsetzen in den Schlitz (23) mit einer in Längsrichtung verlaufenden Dichtungsnut (29) versehen ist.

5. Verfahren nach Anspruch 3, **dadurch gekennzeichnet, dass** die Einschubleiste (24) nach dem Einsetzen in den Schlitz (23) und der stoffschlüssigen Verbindung mit der Innenwand des Schaufelblattes (12) mit einer in Längsrichtung verlaufenden Dichtungsnut (29) versehen wird.

6. Verfahren nach Anspruch 5, **dadurch gekennzeichnet, dass** die Dichtungsnut (29) durch ein Funkenerosionsverfahren erzeugt wird.

7. Verfahren nach einem der Ansprüche 1 bis 6, **dadurch gekennzeichnet, dass** die in dem Schlitz (23) sitzende Einschubleiste (24) mit der Innenwand des Schaufelblattes (12) durch Hartlöten stoffschlüssig verbunden wird.

8. Verfahren nach Anspruch 7, **dadurch gekennzeichnet, dass** zum Hartlöten ein CoNiCrWC-Pulver vom Typ MM509 verwendet wird und der Prozess eine Temperaturbehandlung bei etwa 1220 °C einschliesst.

## Claims

1. Method for reconditioning a turbine blade, especially a stator blade (10) of the first blade row of a gas turbine, which turbine blade (10) comprises a blade airfoil (12) which extends in the longitudinal direction of the blade and into the hollow inner space (18) of which inserts (14, 15, 16) can be inserted in the longitudinal direction of the blade for the distribution and guiding of cooling air which flows in the inner space (18), wherein the inserts (14, 15, 16) with a rib (20) engage with sealing effect in a U-shaped sealing groove (19) which is machined out on the inner wall of the blade airfoil (12) and extends in the longitudinal direction of the blade, **characterized in that** in a first step the sealing groove is removed from the inner wall of the blade airfoil, forming a slot (23), **in that** in a second step an insertion strip (24), which is provided for sealing, is inserted into the slot (23), and **in that** in a third step the insertion strip (24), which is seated in the slot (23), is connected in a materially bonding manner to the inner wall of the blade airfoil (12).

2. Method according to Claim 1, **characterized in that** removal of the sealing groove (19) and introduction of the slot (23) are carried out by means of an electrical discharge machining process.

3. Method according to Claim 1 or 2, **characterized in that** the slot (23) has a dovetail-shaped cross section and the insertion strip (24) has a cross section which is adapted to this.

4. Method according to Claim 3, **characterized in that** the insertion strip (24) is already provided with a sealing groove (29), which extends in the longitudinal direction, before insertion into the slot (23).

5. Method according to Claim 3, **characterized in that** the insertion strip (24) is provided with a sealing groove (29), which extends in the longitudinal direction, after insertion into the slot (23) and after the materially bonding connection to the inner wall of the blade airfoil (12).

6. Method according to Claim 5, **characterized in that** the sealing groove (29) is produced by means of an electrical discharge machining process.

7. Method according to one of Claims 1 to 6, **characterized in that** the insertion strip (24), which is seated in the slot (23), is connected in a materially bonding manner to the inner wall of the blade airfoil (12) by means of hard soldering.

8. Method according to Claim 7, **characterized in that** for hard soldering a CoNiCrWC powder of type MM509 is used and the process includes a temperature treatment at about 1220°C.

## Revendications

1. Procédé de remise en état d'une aube de turbine, en particulier d'une aube directrice (10) d'une première rangée d'aubes d'une turbine à gaz, aube de turbine (10) qui comprend une pale (12) s'étendant dans la direction longitudinale de l'aube, dans l'espace intérieur creux (18) de laquelle on peut introduire des inserts (14, 15, 16) dans la direction longitudinale de l'aube pour la répartition et la déviation d'air de refroidissement circulant dans l'espace intérieur (18), dans lequel les inserts (14, 15, 16) s'engagent avec une nervure (20) de façon étanche dans une rainure d'étanchéité en forme de U (19) formée dans la paroi intérieure de la pale (12) et s'étendant dans la direction longitudinale de l'aube, **caractérisé en ce que** dans une première étape, on élimine la rainure d'étanchéité de la paroi intérieure de la pale (12) en formant une fente (23), **en ce que** dans une deuxième étape on insère dans la fente (23) une baguette rapportée (24) prévue pour la rendre étanche, et **en ce que** dans une troisième étape on assemble la baguette rapportée (24) logée dans la fente (23) par complémentarité de matière avec la paroi intérieure de la pale (12).

2. Procédé selon la revendication 1, **caractérisé en ce que** l'on effectue l'élimination de la rainure d'étanchéité (19) et la réalisation de la fente (23) au moyen d'un procédé d'usinage par électroérosion.

3. Procédé selon la revendication 1 ou 2, **caractérisé en ce que** la fente (23) présente une section transversale en forme de queue d'aronde et la baguette rapportée (24) présente une section transversale adaptée à celle-ci.

4. Procédé selon la revendication 3, **caractérisé en ce que** la baguette rapportée (24) est munie d'une rainure d'étanchéité (29) s'étendant en direction longitudinale, déjà avant son insertion dans la fente (23).

5. Procédé selon la revendication 3, **caractérisé en ce que** l'on munit la baguette rapportée (24) d'une rainure d'étanchéité (29) s'étendant en direction longitudinale après son insertion dans la fente (23) et son assemblage par complémentarité de matière avec la paroi intérieure de la pale (12).

6. Procédé selon la revendication 5, **caractérisé en ce que** l'on produit la rainure d'étanchéité (29) par un procédé d'usinage par électroérosion.

7. Procédé selon l'une quelconque des revendications 1 à 6, **caractérisé en ce que** l'on assemble la baguette rapportée (24) logée dans la fente (23) par complémentarité de matière avec la paroi intérieure de la pale (12) par brasage dur.

8. Procédé selon la revendication 7, **caractérisé en ce que** l'on utilise pour le brasage dur une poudre CoNiCrWC du type MM509 et le processus comprend un traitement thermique à environ 1220°C.
